# EUROPEAN PATENT APPLICATION

(11) **EP 4 344 157 A1**
(43) Date of publication of application: **27.03.2024**
(21) Application number: 22196612.0
(22) Date of filing: 20.09.2022
(51) Int. Cl.: H04L 47/74, H04L 47/783

(54) **SYSTEM AND METHOD FOR MANAGING THE DISTRIBUTION OF COMMUNICATION RESOURCES TO CONSUMERS IN A COMMUNICATION SYSTEM**

(71) Applicant: NTT DOCOMO, INC., Chiyoda-Ku Tokyo 100-6150 (JP)
(72) Inventor: HIGO, Naoki, 80687 Munich (DE); TRIAY MARQUES, Joan, 80687 Munich (DE); HATANAKA, Yoshitaka, Tokyo, 100-6150 (JP); KONO, Tomoki, Tokyo 100-6150 (JP)
(74) Representative: Viering, Jentschura & Partner mbB Patent- und Rechtsanwälte

(57) **Abstract**

According to one embodiment, a communication system is described comprising, for each of a plurality of resource consumers, a broker component representing the resource consumer, wherein each broker component is configured to offer one or more communication system resources allocated to the resource consumer represented by the broker component to one or more other of the broker components for re-allocation to one or more of the resource consumers represented by the one or more other broker components, request one or more communication system resources allocated to at least one of the one or more of the resource consumers represented by the one or more other of the broker components from the one or more other of the broking components for re-allocation to the resource consumer represented by the broker component, accept and/or reject offers and requests received from the one or more other of the broker components; and initiate re-allocation of communication system resources according to accepted offers and requests.

## Description

The present disclosure relates to systems and methods for managing the distribution of communication resources to consumers in a communication system.

Modern communication systems include a high amount of communication system resources including computation resources (processing power), storage resources (memory) and data transmission resources (wired and wireless transmission bandwidth) which may be used by multiple resource consumers (e.g. "tenants") to provide communication services. Since provision of communication system resources requires effort and cost, communication system resources should be efficiently used. To allow efficient usage, approaches for flexible and efficient distribution of communication system resources among resource consumers are in particular desirable.

According to one embodiment, a communication system is provided including, for each of a plurality of resource consumers, a broker component representing the resource consumer. Each broker component is configured to
- offer one or more communication system resources allocated to the resource consumer represented by the broker component to one or more other of the broker components for re-allocation to one or more of the resource consumers represented by the one or more other broker components,
- request one or more communication system resources allocated to at least one of the one or more of the resource consumers represented by the one or more other of the broker components from the one or more other of the broking components for re-allocation to the resource consumer represented by the broker component,
- accept and/or reject offers and requests received from the one or more other of the broker components and
- initiate re-allocation of communication system resources according to accepted offers and requests.

According to another embodiment, a method for managing distribution of communication system resources in a communication system to resource consumers according to the above communication system is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a communication system, in particular the management framework for communication resources of the communication system.
- Figure 2: shows a communication system including a de-centralized approach for distribution and association of resources with resource consumers.
- Figure 3: illustrates operation phases of a broker (component).
- Figure 4: shows a flow diagram illustrating a negotiation of an exchange of communication system resources between three brokers and two agents.
- Figure 5: shows a flow diagram illustrating an example for the execution of operations to realize the re-association of figure 4 for the case that the first broker offers resources to the second broker.
- Figure 6: shows a flow diagram illustrating a further example for the execution of operations to realize the re-association of figure 4 for the case that the first broker offers resources to the second broker.
- Figure 7: shows an example with an N-to-1 relation of resource orchestrators and tenants.
- Figure 8: shows an example with a 1-to-N relation of resource orchestrators and tenants.
- Figure 9: shows an architecture where there is no connection between brokers of a first tenant and a second tenant.
- Figure 10: shows a communication system according to an embodiment.
- Figure 11: shows a flow diagram illustrating a method for managing distribution of communication system resources in a communication system to resource consumers according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication system is provided including, for each of a plurality of resource consumers, a broker component representing the resource consumer. Each broker component is configured to
   - offer one or more communication system resources allocated to the resource consumer represented by the broker component to one or more other of the broker components for re-allocation to one or more of the resource consumers represented by the one or more other broker components,
   - request one or more communication system resources allocated to at least one of the one or more of the resource consumers represented by the one or more other of the broker components from the one or more other of the broking components for re-allocation to the resource consumer represented by the broker component,
   - accept and/or reject offers and requests received from the one or more other of the broker components and
   initiate re-allocation of communication system resources according to accepted offers and requests.
Example 2 is the communication system of Example 1, wherein each broker component is configured to initiate re-allocation of communication system resources according to each offer it accepts and/or according to each request it accepts.
Example 3 is the communication system of Example 1 or 2, wherein re-allocation of communication system resources includes re-allocation of one or more communication resources offered by one of the broker components from the resource consumer represented by the one of the broker components to the resource consumer represented by another one of the broker components if the other one of the broker components accepts the offer for the one or more communication resources.
Example 4 is the communication system of any one of Examples 1 to 2, wherein re-allocation of communication system resources includes re-allocation of one or more communication resources requested by one of the broker components from the resource consumer represented by another one of the broker components to the resource consumer represented by the broker component if the one other of the broker components accepts the request for the one or more communication resources.
Example 5 is the communication system of any one of Examples 1 to 4, including an infrastructure managing component configured to perform the re-allocation.
Example 6 is the communication system of any one of Examples 1 to 5, wherein the broker component is configured to offer the one or more communication system resources allocated to the resource consumer represented by the broker component if the one or more communication system resources allocated to the resource consumer represented by the broker component fulfil an expendability criterion of the resource consumer represented by the broker component.
Example 7 is the communication system of Example 6, including at least one agent component for each of the plurality of resource consumers, wherein the at least one agent is configured to determine whether the one or more communication resources allocated to the resource consumer represented by the broker component fulfil the expendability criterion.
Example 8 is the communication system of any one of Examples 1 to 7, wherein the broker component is configured to request the one or more communication system resources allocated to the at least one of the one or more of the resource consumers represented by the one or more other of the broker components if the one or more communication system resources allocated to the at least one of the one or more of the resource consumers represented by the one or more other of the broker components fulfil a requirement criterion of the resource consumer represented by the broker component.
Example 9 is the communication system of Example 8, including at least one agent component for each of the plurality of resource consumers, wherein the at least one agent is configured to determine whether the one or more communication resources allocated to the at least one of the one or more of the resource consumers represented by the one or more other of the broker components fulfil the requirement criterion.
Example 10 is the communication system of any one of Examples 1 to 9, wherein the communication system resources include computational resources, storage resources and data transmission resources.
Example 11 is the communication system of any one of Examples 1 to 10, wherein each resource consumer provides communication services using the communication system resources allocated to the resource consumer.
Example 12 is the communication system of any one of Examples 1 to 11, wherein each resource consumer includes a resource orchestration system configured to provide network functions for providing communication services.
Example 13 is the communication system of any one of Examples 1 to 12, wherein the offer for one or more communication system resources allocated to the resource consumer includes a specification of a compensation requested for the one or more communication system resources.
Example 14 is the communication system of any one of Examples 1 to 13, wherein the offer and/or the request includes a specification of a geographical location of the one or more communication system resources.
Example 15 is a method for managing distribution of communication system resources in a communication system to resource consumers, including:
   Representing each of a plurality of resource consumers by a broker component; and each broker component
   - offering one or more communication system resources allocated to the resource consumer represented by the broker component to one or more other of the broker components for re-allocation to one or more of the resource consumers represented by the one or more other broker components; and/or
   - requesting one or more communication system resources allocated to at least one of the one or more of the resource consumers represented by the one or more other of the broker components from the one or more other of the broking components for re-allocation to the resource consumer represented by the broker component;
   - accepting and/or rejecting offers and/or requests received from the one or more other of the broker components; and
   - initiating re-allocation of communication system resources according to accepted offers and/or requests.

It should be noted that one or more of the features of any of the examples above may be combined with any one of the other examples. In particular, the Examples described in context of the device are analogously valid for the method.

According to further embodiments, a computer program and a computer readable medium are provided including instructions, which, when executed by a computer, make the computer perform the method of any one of the above Examples.

In the following, various examples will be described in more detail.

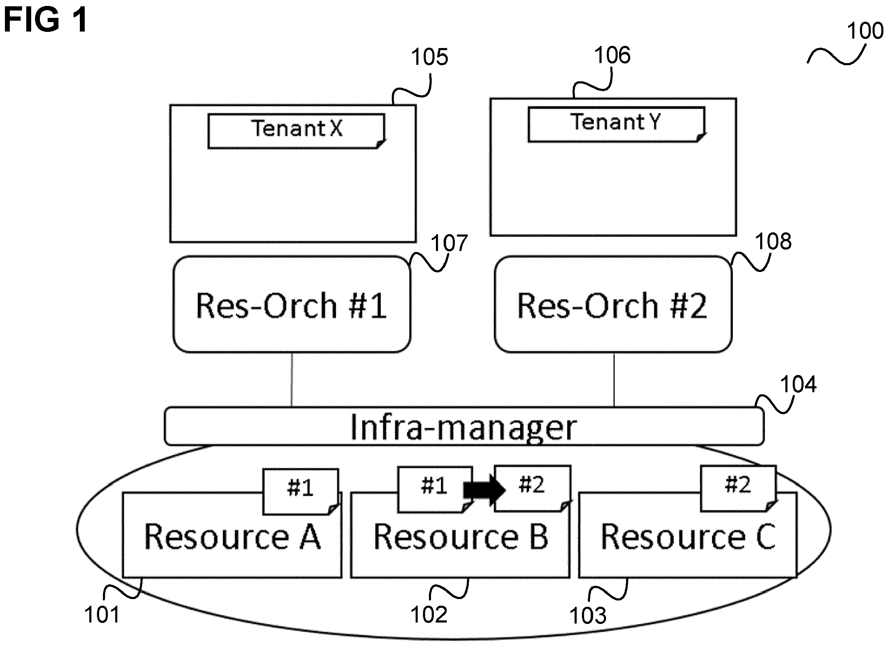

Figure 1 shows a communication system 100, in particular the management framework for communication resources of the communication system.

The communication system 100 includes communication system resources 101, 102, 103 which are managed by an infrastructure manager 104. The communication system resources include computational, storage and/or network resources, e.g. in the form of server computers, dedicated accelerators for certain tasks (e.g. provided in a cloud), special hardware like programmable metasurfaces etc.

The resources 101, 102, 103 are used (or "consumed") by resource consumers. In the example of figure 1, tenants (i.e. communication providers) 105, 106 can be seen as the resource consumers. Each tenant is provided with (communication system) functions (in particular network functions) by a respective resource orchestrator 107, 108 which provides the functions using the communication system resources allocated to the resource consumer. It should be noted that also a tenant 105, 106 together with its resource orchestrator 107, 108 (i.e. the resource orchestrator 107, 108 which provides functions for it) may be seen as resource consumer. Further, alternatively, the resource orchestrator 107, 108 may also be seen as the resource consumer (in the sense that it uses the resources to provide functions or, in other words, allocates the resources for the provision of functions).

So, for example, multiple resource orchestrators 107, 108 manage resources 101, 102, 103, e.g. located in the same region or zone and the resource orchestrators 107, 108 are responsible for certain scope management, e.g., domain, a sort of application, tenant, etc. and each resource 101, 102, 103 is, at a point of time, associated with one of the resource orchestrators 107, 108 and tenant 105, 106 (or it may also be unallocated).

Since communication system resources 101, 102, 103 are typically limited in number, efficiency of resource consumption as well as flexibility of distribution of communication system resources to resource consumers, e.g. for flexibility of provisioning of resources or functions for domains, applications and network slices, are desirable. For example, it may be desirable to change the allocation of a communication resource from the first resource orchestrator 107 to the second resource orchestrator 108 (as illustrated for resource B in figure 1). To address this, according to various embodiments a decentralized architecture is provided which allows realizing a flexible association between resources (i.e. a resource 101, 102, 103) and a resource consumer (i.e. a tenant 105, 106 and/or a resource orchestrator 107, 108).

So, according to various embodiments, approaches are described which allow a flexible association between a resource orchestrator (and thus resource consumer) and resources and thus allow the usage of available resources by multiple orchestrators (and consumers) in turn.

It should be noted that for this, a single entity may be provided on top of the resource orchestrators. This, however, leads to a centralized architecture for distribution (and association) of resources with resource consumers. Therefore, according to various embodiment, a de-centralized approach is provided which allows
- avoiding a single point of failure (which would be there in form of a single entity in a centralized approach),
- high scalability covering, e.g., nation-wide cloudified platforms and potential for various providers and sources for Infrastructure-as-a-Service, and
- modularized parts considering update of various pieces of software realizing the multiple orchestration and management systems.

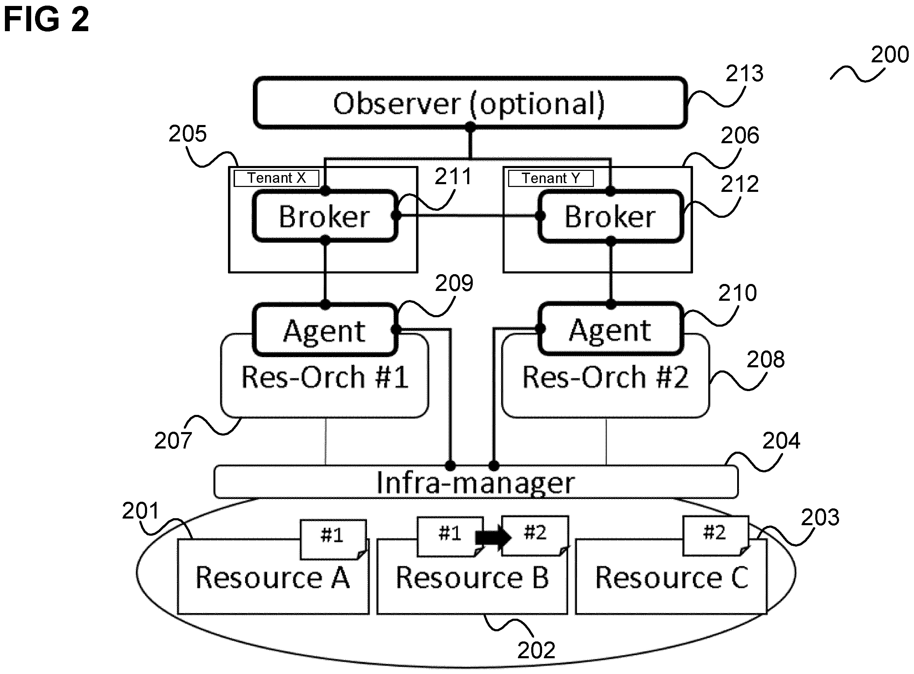

Figure 2 shows a communication system 200 including a de-centralized approach for distribution and association of resources with resource consumers.

Similarly to the communication system 100, the communication system 200 includes communication system resources 201, 202, 203 which are managed by an infrastructure manager 204, tenants 205, 206 and resource orchestrators 207, 208 providing functions for the tenants using the communication system resources allocated to the respective resource consumer (which, as mentioned above, can be seen as a tenant, as a resource orchestrator or as a combination of both).

Each resource orchestrator 207, 208 is provided with a respective agent 209, 210 and each resource consumer (here including the respective tenant 205, 206) is provided with a respective broker 211, 212 which represents the interests of the resource consumer (so, for each resource consumer, there is a pair of broker and agent). The agents 209, 210 and brokers 211, 212 are components (of functions) implemented in software running on one or more server computers (which for example also implement the resource orchestrators etc.)

Each broker 211, 212 is a representative for the respective resource consumer and is configured to negotiate with other brokers about resources exchange.

Each agent 209, 210 handles resource information and triggers change of the association of resources to resource consumers. As depicted, it may reside at the respective resource orchestrator 207, 208 (i.e. be part of its functionality).

An interface is provided between the brokers 211, 212, from each broker 211, 212 to the respective agent 209, 210, from each agent 209, 210 to the infrastructure manager 204 and from each broker 211, 212 to an optional observing (or monitoring) entity 213 which may have the function to approve exchanges of resources between resource consumers if needed.

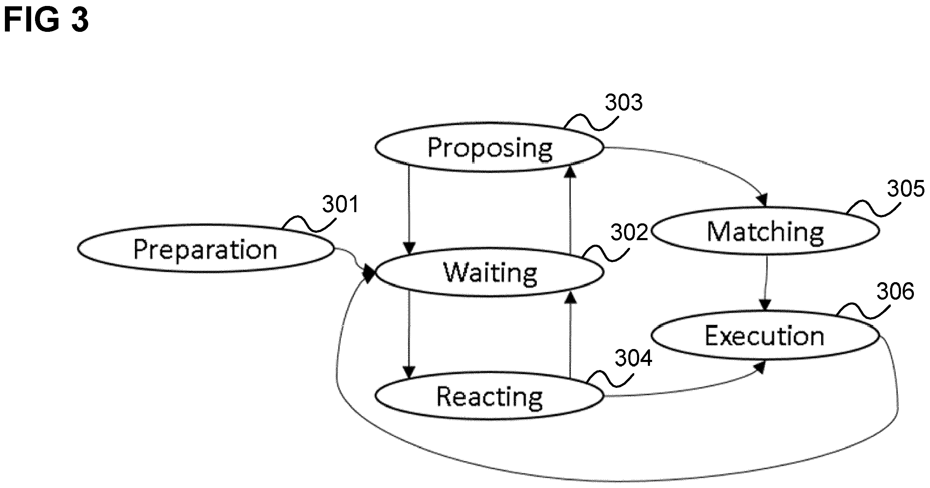

Figure 3 illustrates operation phases (i.e. operational states) of a broker.

### Phase 0: Preparation (Pre-condition) 301

- (Communication) connections between agents and brokers (for each pair of agent and broker) and connections between brokers are established.
- The broker configures its associated agent (i.e. the agent of the pair to which the broker belongs) so that the agent can decide upon a position it takes which may be "Sell", "Buy" or "Watch".

### Phase 1-1: Waiting 302

- The broker waits for proposals from the other brokers. If it receives a proposal from another broker, it moves to Phase 1-3: Reacting.
- If the broker receives a changed position from its associated agent, it moves to Phase 1-2: Proposing.

### Phase 1-2: Proposing 303

- The agent decides about its position on each group level based on configuration. Here, the group level means a geographical district class. It can for example be "Country", "Prefecture", "City", "Street", "Building", "Room" or "Server rack". For instance, if a resource consumer needs resources within a certain city, it will not want its broker to request resources from another city. However, another resource consumer which needs resources within a country may not care from which city in the country the resources come.
- The broker proposes the position to (one or more) other brokers. If it receives one or more proposals in response (which is desired in the sense that it corresponds to its own proposal), it moves to Phase 2: Matching, but if not it moves to Phase 1-1: Waiting.

### Phase 1-3: Reacting 304

- The broker reacts to the received proposal, proposing its present position in response.
- If the own proposal is accepted by the other broker (i.e. there is a match with another broker), it moves to Phase 3: Execution, but if not then moves to Phase 1-1: Waiting.

### Phase 2: Matching 305

- The broker decides which proposal is accepted based on the received proposals (i.e. it determines a broker with which there is a match) and moves to Phase 3: Execution.

### Phase 3: Execution 306

- The matched brokers exchange relevant information and the agents issue commands for the infrastructure manager to change association (i.e. for re-allocation of communication resources). So, for example, the matched brokers initiate re-allocation by informing the agents which, in response, perform re-allocation by communication with the infrastructure manager.
- After that, the broker moves to Phase 1-1: Waiting.

It should be noted that since the approach described above does not rely on a centralized exchange systems but rather on a peer-to-peer communication between the brokers, the brokers have a behaviour to accordingly react on proposals from other brokers (while in case of a centralized exchange systems, the exchange system would be responsible for the reactions).

Connections between the brokers are predesigned in the preparation phase (Phase 0), possibly considering geographical proximity (so two brokers only have connections, i.e. only communicate (i.e. only exchange proposals, i.e. offers and requests), if they are associated with resource consumers that are geographically sufficiently near to others), which means that the number of reactions which a broker needs to handle can be limited. Therefore, peer-to-pear communication between the brokers is feasible even though each broker accordingly reacts to each proposal it receives from another broker.

A proposal represents a position of an agent (and thus also of the broker associated of the agent). It indicates "Sell" (i.e. a resource is offered), "Buy" (i.e. a resource is requested) or "Watch" (i.e. the agent decides that its associated broker should passively wait for other brokers' proposals). An agent can change its position if its associated broker is in phase "Waiting". The agent may be configured to decide to offer one or more resources when they fulfil an expendability criterion of the respective resource consumer, e.g. they are not required for the services offered by the resource consumer (e.g. to fulfil a predetermined service quality). Similar, the (same) agent may be configured to decide to request one or more resources when they fulfil a requirement criterion of the respective resource consumer, e.g. they are required for the services offered by the resource consumer (e.g. to fulfil a predetermined service quality or to provide a desired service at all).

If an agent's position is either "Sell" or "Buy" then the associated broker includes the following information in the proposal which it sends to other brokers in reaction to this position of its associated agent (the agent may provide this information to the broker).
- Feature(s): indicate(s) feature(s) of the resource (offered or requested), e.g. type of resource, capacity of the resource, etc.
- Placement: indicates where the resource is placed or expected to be.
- Token: a compensation requested for the offered one or more resources; this can be associated with economical things (e.g., crypto currency token) and transferred from a "Buy" position broker to a "Sell" position broker when their proposal are matched. It is necessary to make sure that bilateral transaction between the brokers can use appropriate token. The kind of token can respectively differ depending on each connection between brokers.

The broker or agent can also set up a timeout so that the proposal can be dismissed after a certain period. After that, the position is changed to "Watch" and if an amount of the token is reserved for the proposal, it is released.

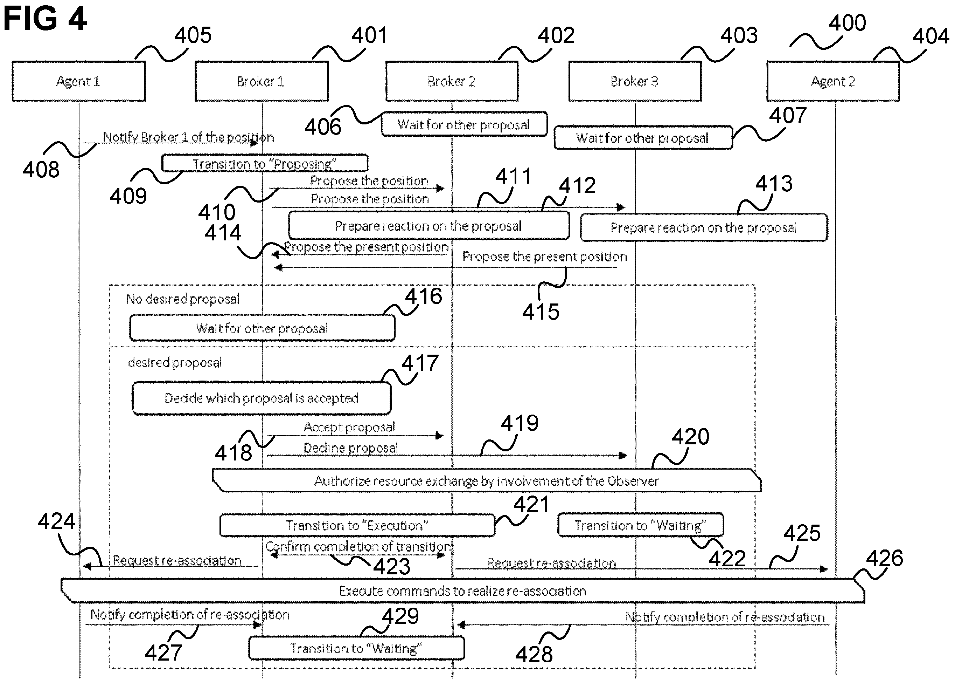

Figure 4 shows a flow diagram 400 illustrating a negotiation of an exchange of communication system resources between a first broker 401, a second broker 402 (e.g. corresponding to brokers 211 and 212 of figure 2) and a third broker 403. The first broker's associated agent 405 and the second broker's associated agent 404 are also involved in the flow.

It is assumed that the second broker 402 starts in "Waiting" state in 406 and the third broker 403 starts in "Waiting" state in 407.

In 408, the agent 405 informs the first broker 401 (i.e. its associated broker) about its position, assumed to be "Proposing". Accordingly, the first broker 401 transitions to "Proposing" state in 409 and proposes its position to the second broker 402 in 410 and to the third broker 403 in 411 (i.e. sends corresponding messages which indicate what the first broker 401 offers or requests).

In reaction of the reception of this proposal, the second broker 402 transitions to "Reacting" in 412 and the third broker 403 transitions to "Reacting" in 413 and respond to the first broker 402 with their own proposals in 414 and 415, respectively.

If none of the responses includes a desired proposal (which fits its own proposal), the first broker 401 switches into "Waiting" state in 416.

If, however, at least one of the responses includes a desired proposal, the first broker 401 switches to "Matching" state and decides which desired proposal is accepted (which is trivial if there is only one).

It is assumed that first broker 401 accepts the proposal of the second broker 402. Accordingly, in 418, it informs the second broker 402 that it accepts its proposal and, in 419, informs the third broker 403 that it declines its proposal.

In 420, optionally, the observer 213 authorizes the resource exchange between the first broker 401 and the second broker 402.

In 421, the first broker 401 and the second broker 402 transition to "Execution" and the third broker 403 transitions (back) to "Waiting" in 422.

In 423, the first broker 401 and the second broker 402 confirm to themselves that they have completed the transition to "Execution" and the first broker 401 requests its associated agent 405 to re-associate one or more communication resources according to the second broker's proposal and the second broker 402 requests its associated agent 404 to re-associate one or more communication resources according to the second broker's proposal.

In 426, operations are executed by the agents 404, 405, to realize the re-association.

In 427, the first broker's agent 405 informs the first broker 401 about completion of re-association and in 427, the second broker's agent 404 informs the second broker 402 about completion of re-association in 428.

The first broker 401 and the second broker 402 then transition to "Waiting" state in 429.

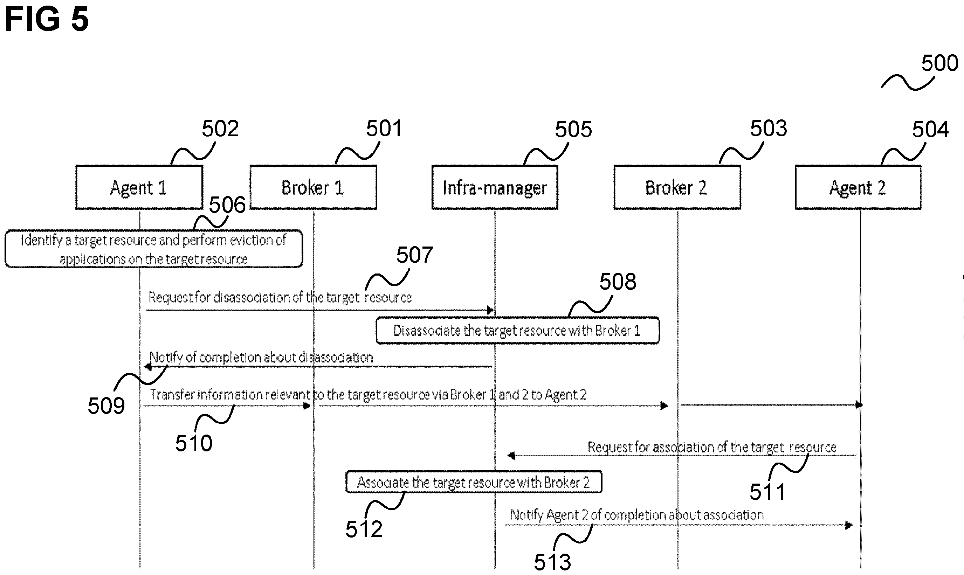

Figure 5 shows a flow diagram 500 illustrating an example for the execution of operations to realize the re-association of 426 for the case that the first broker offers ("sells") resources to the second broker.

This flow may for example be carried out in VM-based (i.e. compute resources are used to deploy virtual machines (VM)) infrastructures such as those managed by OpenStack as infrastructure manager.

The first broker 501 and its agent 502, the second broker 503 and its agent 504 and an infrastructure manager 505 (e.g. corresponding to infrastructure manager 204) are involved in the flow.

In 506, the first broker's agent 502 identifies a target resource (to be re-allocated) and performs eviction of applications on the target resource.

In 507, the first broker's agent 502 requests the infrastructure manager 505 for disassociation of the target resource.

In 508, the infrastructure manager 505 disassociates the target resource from the first broker 501 and informs the first broker's agent 502 about the disassociation in 509.

In 510, the first broker's agent 502 transfers information relevant to the target resources via the first broker 501 and the second broker 503 to the second broker's agent 504.

In 511, the second broker's agent 504 requests association of the target resource from the infrastructure manager 505.

In 512, the infrastructure manager 505 associates the target resource with the second broker 503 and notifies the second broker's agent 504 in 513 about the association.

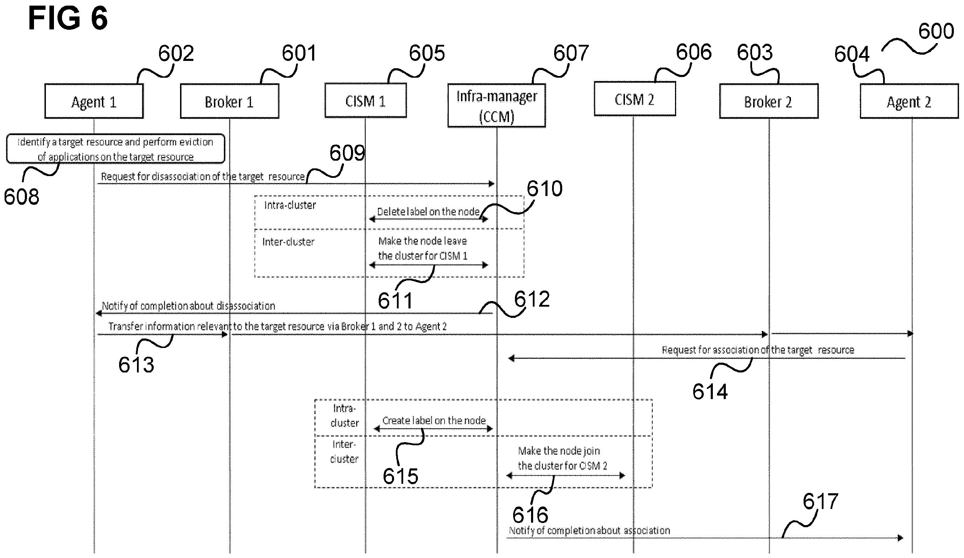

Figure 6 shows a flow diagram 600 illustrating a further example for the execution of operations to realize the re-association of 426 for the case that the first broker offers ("sells") resources to the second broker.

This flow may for example be carried out in an OS container-based (i.e. compute resources are used to deploy OS containers) infrastructures such as those managed by Kubernetes as container infrastructure service (CIS) system.

The first broker 601 and its agent 602, the second broker 603 and its agent 604, a first CISM (CIS Management) 605, a second CISM 606 and an infrastructure manager 607, here a CCM (CIS cluster manager) are involved in the flow.

In 608, the first broker's agent 602 identifies a target resource (to be re-allocated) and performs eviction of applications on the target resource.

In 609, the first broker's agent 602 requests the infrastructure manager 605 for disassociation of the target resource.

In 610, the first CISM 605 and the infrastructure manager 607 delete a corresponding label on a corresponding node and, in 611, make the node leave the CIS cluster for the first CISM 605.

In 612, the infrastructure manager 607 informs the first broker's agent 602 about the disassociation.

In 613, the first broker's agent 602 transfers information relevant to the target resources via the first broker 601 and the second broker 603 to the second broker's agent 604.

In 614, the second broker's agent 604 requests association of the target resource from the infrastructure manager 607.

In 615, the second CISM 606 and the infrastructure manager 607 create a corresponding label on a corresponding node and make the node join the CIS cluster for the second CISM 606 in 616.

In 617, the infrastructure manager 607 notifies the second broker's agent 604 about the association.

The information transmitted in 510 and 613 from and agent to the other for example includes
- Identifier: indicates an identifier of the target resource.
- Feature: indicates one or more features of the target resource.
- Placement: indicates where the target resource is placed or expected to be.
- Infrastructure manager: indicates which infrastructure manager manages the target resource.
- Provider name: indicates which infrastructure provider hosts the target resource.

It should be noted that in the example of figure 2, there is a 1-to-1 relation of resource orchestrators and tenants.

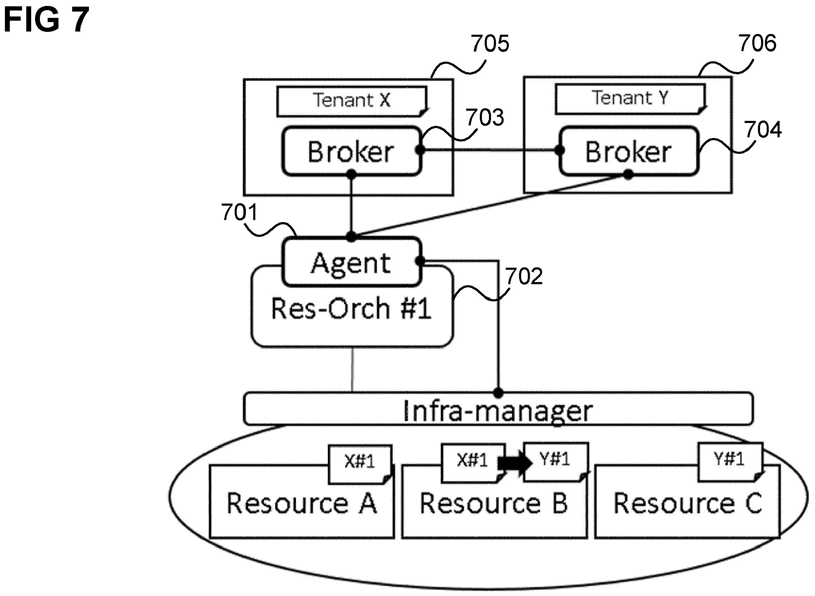

Figure 7 shows an example with a N-to-1 relation of resource orchestrators and tenants. Specifically, in this example, the agent 701 of a resource orchestrator 702 is connected to the broker 703, 704 of each of two tenants 705, 706, i.e. the agent for both brokers is identical. The operation may still be similar to the one described above wherein some steps may be simplified since there is no need for communication with several agents.

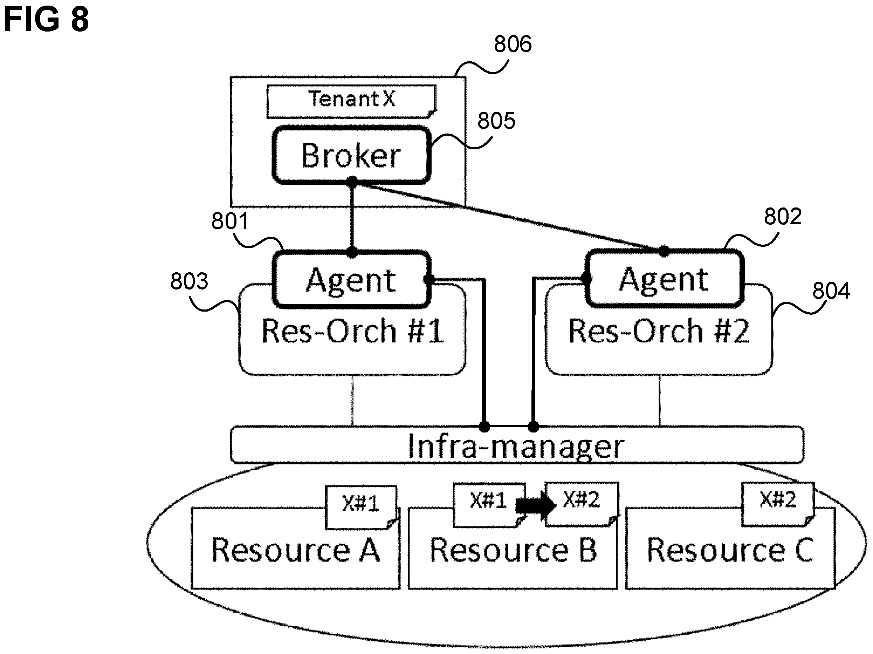

Figure 8 shows an example with a 1-to-N relation of resource orchestrators and tenants.

Specifically, in this example the agents 801, 802 of two resource orchestrators 803, 804 are connected to the broker 805 of the same tenant 806. This broker may communicate with other brokers 807 representing other tenants as described above (where these other tenants may also have a 1-to-N relation but also N-to-1 relation or a 1-to-1 relation to resource orchestrators). Again, the operation may still be similar to the one described above wherein, however, the broker 805 may need to determine with which agent 801, 802 it needs to communicate depending on the which agent is responsible for the target resource.

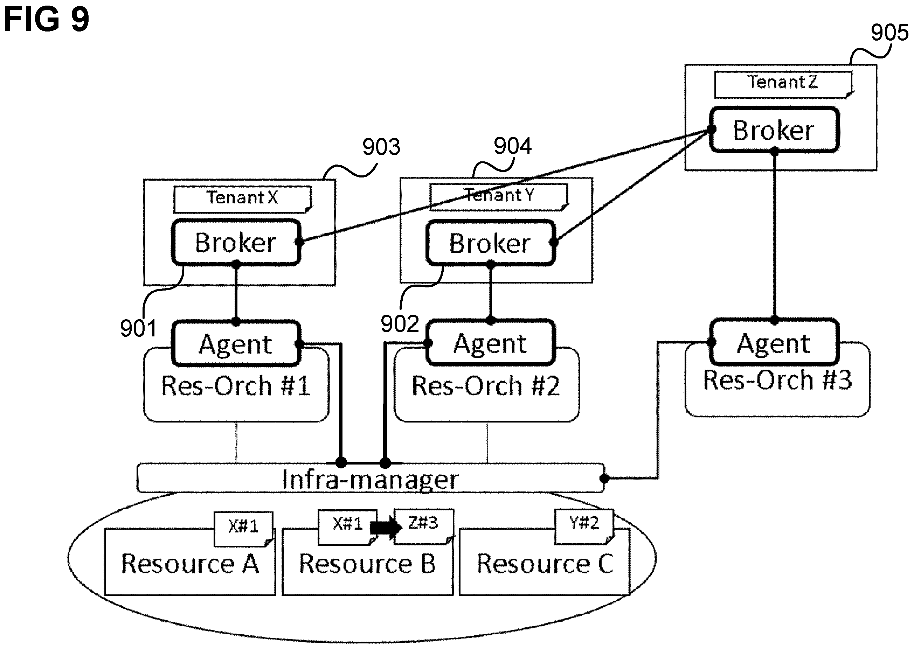

Further, it is not necessary that there is a direct connection between brokers but communication may be over other brokers, like illustrated in figure 9.

Figure 9 shows an architecture 900 where there is no connection between brokers 901, 902 of a first tenant 903 and a second tenant 904. A third tenant 905 is used for pooling available resources (which means the third tenant 905 can be seen to work as a dummy tenant). The first tenant 903 and the second tenant 904 give and take resources via the third tenant 905. By shaping star topology regarding connections among brokers, centralized management can also be realized.

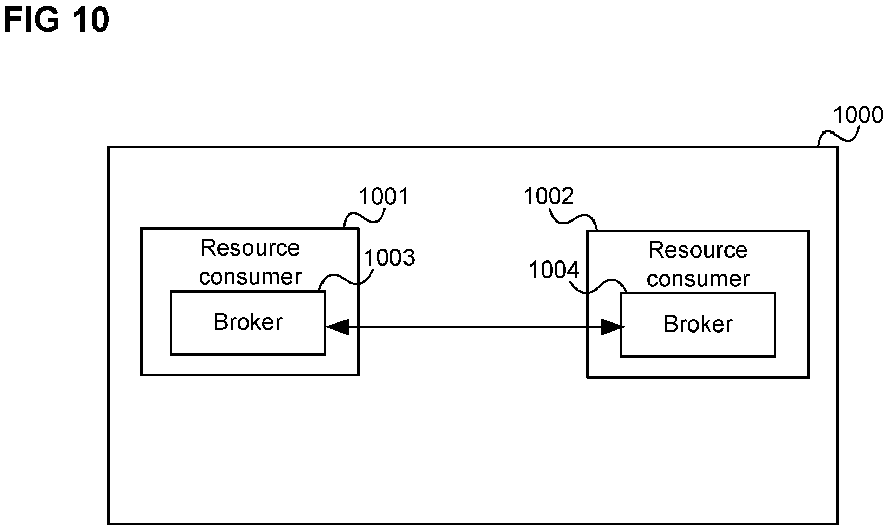

In summary, according to various embodiments, a communication system is provided as illustrated in figure 10.

Figure 10 shows a communication system 1000 according to an embodiment.

The communication system includes, for each of a plurality of resource consumers 101, 102, a broker component 103, 104 representing the resource consumer 101, 102.

Each broker component is configured to
- offer one or more communication system resources allocated to the resource consumer represented by the broker component to one or more other of the broker components for re-allocation to one or more of the resource consumers represented by the one or more other broker components;
- request one or more communication system resources allocated to at least one of the one or more of the resource consumers represented by the one or more other of the broker components from the one or more other of the broking components for re-allocation to the resource consumer represented by the broker component;
- accept and/or reject offers and requests received from the one or more other of the broker components; and
- initiate re-allocation of communication system resources according to accepted offers and requests.

According to various embodiments, in other words, communication system resource distribution is negotiated between brokers representing the users (consumers) of the communication system resources in a de-centralized, in particular peer-to-peer, manner.

For offering and requesting communication resources, a broker sends a corresponding offer message or request message, respectively.

The approach of figure 10 can be used to realize efficient resource usage and can avoid single point of failure. Further, it provides high scalability covering, for example, cross nation-wide cloudified platforms and enables easy update of communication systems.

It can be implemented using a centralized architecture pattern as in figure 9, wherein the distribution can however still be seen to be de-centralized since it is based on communication among the brokers (rather than done by a central entity which decides about the distribution). The approach of figure 10 allows enhancing telecom operator orchestration mechanisms with methods, mechanisms and interfaces which can enable change of association between a resource orchestrator and/or a tenant and resources. This provides an efficient and flexible allocation (distribution) of resources which allows to significantly reduce the amount of unintentionally surplus resources. The approach is applicable and brings interoperability to resource orchestrators of various standardization groups (e.g, O-RAN, ETSI NFV, etc).

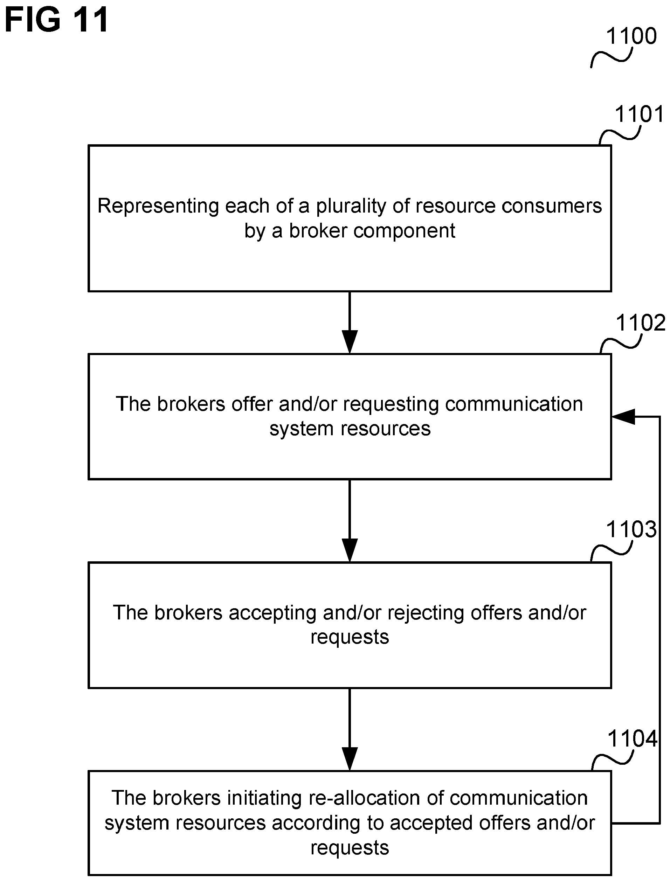

The communication system for example carries out a method as illustrated in figure 11.

Figure 11 shows a flow diagram 1100 illustrating a method for managing distribution of communication system resources in a communication system to resource consumers according to an embodiment.

In 1101, each of a plurality of resource consumers is represented by a broker component.

In 1102, each broker component offers one or more communication system resources allocated to the resource consumer represented by the broker component to one or more other of the broker components for re-allocation to one or more of the resource consumers represented by the one or more other broker components and/or requests one or more communication system resources allocated to at least one of the one or more of the resource consumers represented by the one or more other of the broker components from the one or more other of the broking components for re-allocation to the resource consumer represented by the broker component.

In 1103, each broker component accepts and/or rejects offers and/or requests received from the one or more other of the broker components.

In 1104, each broker component initiates re-allocation of communication system resources according to accepted offers and/or requests.

It should be noted that 1102 to 1104 may be performed interchangeably, (at least partially) in parallel and repeatedly.

The components of the communication system (e.g. the brokers, agents, infrastructure manager etc. and (at least partially) the communication system resources) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication system, comprising:
for each of a plurality of resource consumers, a broker component representing the resource consumer;
wherein each broker component is configured to
offer one or more communication system resources allocated to the resource consumer represented by the broker component to one or more other of the broker components for re-allocation to one or more of the resource consumers represented by the one or more other broker components;
request one or more communication system resources allocated to at least one of the one or more of the resource consumers represented by the one or more other of the broker components from the one or more other of the broking components for re-allocation to the resource consumer represented by the broker component; accept and/or reject offers and requests received from the one or more other of the broker components; and
initiate re-allocation of communication system resources according to accepted offers and requests.

2. The communication system of claim 1, wherein each broker component is configured to initiate re-allocation of communication system resources according to each offer it accepts and/or according to each request it accepts.

3. The communication system of claim 1 or 2, wherein re-allocation of communication system resources comprises re-allocation of one or more communication resources offered by one of the broker components from the resource consumer represented by the one of the broker components to the resource consumer represented by another one of the broker components if the other one of the broker components accepts the offer for the one or more communication resources.

4. The communication system of any one of claims 1 to 2, wherein re-allocation of communication system resources comprises re-allocation of one or more communication resources requested by one of the broker components from the resource consumer represented by another one of the broker components to the resource consumer represented by the broker component if the one other of the broker components accepts the request for the one or more communication resources.

5. The communication system of any one of claims 1 to 4, comprising an infrastructure managing component configured to perform the re-allocation.

6. The communication system of any one of claims 1 to 5, wherein the broker component is configured to offer the one or more communication system resources allocated to the resource consumer represented by the broker component if the one or more communication system resources allocated to the resource consumer represented by the broker component fulfil an expendability criterion of the resource consumer represented by the broker component.

7. The communication system of claim 6, comprising at least one agent component for each of the plurality of resource consumers, wherein the at least one agent is configured to determine whether the one or more communication resources allocated to the resource consumer represented by the broker component fulfil the expendability criterion.

8. The communication system of any one of claims 1 to 7, wherein the broker component is configured to request the one or more communication system resources allocated to the at least one of the one or more of the resource consumers represented by the one or more other of the broker components if the one or more communication system resources allocated to the at least one of the one or more of the resource consumers represented by the one or more other of the broker components fulfil a requirement criterion of the resource consumer represented by the broker component.

9. The communication system of claim 8, comprising at least one agent component for each of the plurality of resource consumers, wherein the at least one agent is configured to determine whether the one or more communication resources allocated to the at least one of the one or more of the resource consumers represented by the one or more other of the broker components fulfil the requirement criterion.

10. The communication system of any one of claims 1 to 9, wherein the communication system resources comprise computational resources, storage resources and data transmission resources.

11. The communication system of any one of claims 1 to 10, wherein each resource consumer provides communication services using the communication system resources allocated to the resource consumer.

12. The communication system of any one of claims 1 to 11, wherein each resource consumer comprises a resource orchestration system configured to provide network functions for providing communication services.

13. The communication system of any one of claims 1 to 12, wherein the offer for one or more communication system resources allocated to the resource consumer includes a specification of a compensation requested for the one or more communication system resources.

14. The communication system of any one of claims 1 to 13, wherein the offer and/or the request includes a specification of a geographical location of the one or more communication system resources.

15. A method for managing distribution of communication system resources in a communication system to resource consumers, comprising:
Representing each of a plurality of resource consumers by a broker component; each broker component
offering one or more communication system resources allocated to the resource consumer represented by the broker component to one or more other of the broker components for re-allocation to one or more of the resource consumers represented by the one or more other broker components; and/or
requesting one or more communication system resources allocated to at least one of the one or more of the resource consumers represented by the one or more other of the broker components from the one or more other of the broking components for re-allocation to the resource consumer represented by the broker component;
accepting and/or rejecting offers and/or requests received from the one or more other of the broker components; and
initiating re-allocation of communication system resources according to accepted offers and/or requests.
